# EUROPEAN PATENT APPLICATION

(11) **EP 3 138 373 A1**
(43) Date of publication of application: **08.03.2017**
(21) Application number: 16394004.2
(22) Date of filing: 02.09.2016
(51) Int. Cl.: A01B 59/06

(54) **A HITCH APPARATUS**

(30) Priority: 02.09.2015 IE 20150279
(71) Applicant: O'Connor, John, Kildimo, County Limerick (IE)
(72) Inventor: O'Connor, John, Kildimo, County Limerick (IE)
(74) Representative: Gorman, Francis Fergus

(57) **Abstract**

A hitch apparatus (1) for hitching an implement to a three-point linkage of a tractor, the hitch apparatus (1) comprising a support element (5) comprising a cross member (7) and a pair of spaced apart side members (8) extending downwardly from the cross member (7), and an upstanding member (10) extending upwardly from the cross member (7). A carrier element (25) is slideable upwardly and downwardly on the upstanding member (7). A pair of lower connecting brackets (12) located on the side members (8), and an upper connecting bracket (30) located on the carrier element (25) for connecting the apparatus (1) to the three-point linkage of a tractor. A pair of lower hook-shaped coupling elements (34) also located on the side members (8) and an upper hook-shaped coupling element (42) located on the carrier element (25) for engaging respective mounting pins of lower and upper mounting brackets on the implement. An hydraulic ram (46) acting between one of the side members (8) and the carrier element (25) for urging the carrier element (25) downwardly on the upstanding member (10) so that the mounting pins of the mounting brackets of the implement are tightly gripped between the lower coupling elements (34) and the upper coupling element (42). A ratchet mechanism (50) on the carrier element (25) co-operates with notch openings (54) in the upstanding member (10) for securing the carrier element (25) on the upstanding member (10) with the upper coupling element (42) at a selectable one of a plurality of spacings from the lower coupling elements (34) for tightly engaging the mounting brackets of the implement between the lower coupling elements (34) and the upper coupling element (42).

## Description

The present invention relates to a hitch apparatus for hitching an implement to a three-point linkage of a tractor.

The three-point linkage of a tractor will be well known to those skilled in the art, and is used for hitching agricultural and other implements to the tractor. The three-point linkage comprises two spaced apart lower links, and an upper link spaced apart upwardly from the two lower links. Three mounting points are provided on implements which are suitable for coupling to the three-point linkage of a tractor, for in turn coupling the implement to the tractor. Such mounting points, in general, include mounting brackets which carry mounting pins, which in turn are releasably engageable with the corresponding links of the three-point linkage of the tractor. In general, clevis pins secure the mounting pins in the corresponding mounting brackets of the implement and the links of the three-point linkage. However, the construction of the three-point linkage of a tractor, and in general the construction of the mounting brackets of such implements require manual connection of the mounting brackets to the corresponding links of the three-point linkage. This, it will be appreciated, requires the tractor driver to reverse the tractor towards the implement to be coupled to the tractor, so that the links of the three-point linkage are aligned with and adjacent the corresponding mounting brackets of the implement. The tractor driver must then dismount the tractor and manually connect the mounting brackets of the implement to the corresponding links of the three-point linkage, thereby leading to time wastage, and significant inconvenience.

There is therefore a need for a hitch apparatus which addresses this problem.

The present invention is directed towards such a hitch apparatus.

According to the invention there is provided a hitch apparatus for hitching an implement to a three-point linkage of a tractor, the hitch apparatus comprising a support element and a carrier element coupled together, a pair of spaced apart lower connecting brackets located on the support element for connecting to the two lower links of the three-point linkage of the tractor, a pair of spaced apart lower coupling elements mounted on and extending from the support element for releasably engaging corresponding lower mounting brackets of the implement, an upper connecting bracket carried on the carrier element for connecting to the upper link of the three-point linkage of the tractor, and an upper coupling element carried on and extending from the carrier element for releasably engaging a corresponding upper mounting bracket of the implement, one of the carrier element and the support element being moveable relative to the other one of the carrier element and the support element in a generally upwardly and downwardly direction for varying the spacing between the upper coupling element and the two lower coupling elements.

In one aspect of the invention the lower connecting brackets and the lower coupling elements are located on the support element, and the upper connecting bracket and the upper coupling element are located on the carrier element, so that as the one of the carrier element and the support element is moved in the generally upwardly and downwardly direction relative to the other one of the carrier element and the support element, the spacing between the upper coupling element and the lower coupling elements in the generally upwardly and downwardly direction is proportional to the spacing between the upper connecting bracket and the lower connecting brackets in the generally upwardly and downwardly direction, and preferably, the spacing between the upper coupling element and the lower coupling elements in the generally upwardly and downwardly direction is directly proportional to the spacing between the upper connecting bracket and the lower connecting brackets in the generally upwardly and downwardly direction.

Advantageously, the lower coupling elements are located on the support element at a level substantially similar to the level at which the lower connecting brackets are located on the support element, and preferably, the upper coupling element is located on the carrier element at a level substantially similar to the level at which the upper connecting bracket is located on the carrier element.

In one aspect of the invention the upper coupling element co-operates with the lower coupling elements for releasably gripping the implement with the lower and upper mounting brackets of the implement releasably gripped between the upper and lower coupling elements.

Preferably, the carrier element is slideably mounted on the support element, and advantageously, is slideable in the generally upwardly and downwardly direction relative to the locations of the lower coupling elements.

In one embodiment of the invention a drive means is provided for urging the carrier element in the generally upwardly and downwardly direction on the support element.

Preferably, the lower coupling elements define respective open mouths, and advantageously, the upper coupling element defines an open mouth. Preferably, the lower and upper coupling elements are configured for engaging the corresponding ones of the mounting brackets of the implement in the respective open mouths.

Ideally, the lower coupling elements are located on the support element, and the upper coupling element is located on the carrier element with the open mouths of the lower coupling elements facing the open mouth of the upper coupling element so that when the lower and upper coupling elements engage the corresponding lower and upper mounting brackets of the implement in the open mouths thereof, the lower and upper mounting brackets of the implement are securely gripped between the lower and upper coupling elements.

Preferably, the two lower coupling elements comprise respective lower hook-shaped elements defining the respective open mouths thereof, and advantageously, the upper coupling element comprises an upper hook-shaped element defining the open mouth thereof.

In another aspect of the invention a releasable retaining means is provided for retaining the upper coupling element at a plurality of selectable spacings from the lower coupling elements. Advantageously, the retaining means is mounted on one of the carrier element and the support element, and is releasably engageable with the other one of the carrier element and the support element for releasably retaining the carrier element with the upper coupling element at a selected one of the spacings from the two lower coupling elements.

Advantageously, the retaining means comprises a ratchet type mechanism, and preferably, the ratchet type mechanism comprises a pawl which is pivotally mounted on the one of the carrier element and the support element, and is releasably engageable with a notched rack on the other one of the carrier element and the support element. Preferably, the pawl is configured to be moveable in a direction along the notched rack as the carrier element is being moved relative to the support element for reducing the spacing between the upper coupling element and the two lower coupling elements, and is releasably engageable with an adjacent one of the notches of the notched rack in response to movement of the carrier element relative to the support element for increasing the spacing between the upper coupling element and the two lower coupling elements for preventing inadvertent release of the implement from the coupling elements.

In another aspect of the invention a release means is provided for releasing the retaining means. Preferably, the release means is releasably engageable with the pawl for selectively disengaging the pawl from the notched rack to permit movement of the carrier element relative to the support element for increasing the spacing between the upper coupling element and the two lower coupling elements.

Advantageously, the release means comprises a latch pivotally mounted on the one of the carrier element and the support element on which the pawl is pivotally mounted. Advantageously, the release means is remotely operable, and preferably, the release means is remotely operable by a first pull cord. Advantageously, the latch of the release means is configured for receiving the first pull cord.

Preferably, the pawl is pivotally mounted on the carrier element.

In another aspect of the invention a closure element is provided corresponding to each lower coupling element for releasably closing the open mouth of the corresponding lower coupling element.

Advantageously, the closure elements are operable between a closed state closing the open mouths of the lower coupling elements and an open state providing access to the open mouths thereof. Advantageously, an operating lever is mounted on the support element and is coupled to the closure elements for operating the closure elements from the closed state to the open state. Preferably, the operating lever is remotely operable, and preferably, is remotely operable by a second pull cord. Advantageously, the operating lever is remotely operable by the second pull cord for operating the closure elements from the closed state to the open state. Advantageously, the operating lever is configured for receiving the second pull cord.

In one aspect of the invention the closure elements are resiliently urged into the closed state.

In another aspect of the invention the support element comprises an elongated cross-member, and a pair of spaced apart side members extending downwardly from the cross-member, each side member carrying a corresponding one of the lower connecting brackets, and a corresponding one of the lower coupling elements. Preferably, an upwardly extending member extends upwardly from the cross-member substantially midway relative to the side members, and the carrier member is mounted on the upwardly extending member, and preferably, is slideably mounted thereon.

Advantageously, the lower and upper connecting brackets are configured for releasably engaging the corresponding lower and upper links of the three-point linkage of the tractor.

Additionally, the invention provides a tractor, and the hitch apparatus according to the invention mounted on the three-point linkage of the tractor.

Preferably, an implement is releasably coupled to the hitch apparatus.

The invention will be more clearly understood from the following description of an embodiment thereof, which is given by way of example only, with reference to the accompanying drawings, in which:
Fig. 1 is a perspective view of a hitch apparatus according to the invention for hitching an implement to a three-point linkage of a tractor,
Fig. 2 is a rear elevational view of the hitch apparatus of Fig. 1,
Fig. 3 is a side elevational view of the hitch apparatus of Fig. 1,
Fig. 4 is a top plan view of the hitch apparatus of Fig. 1,
Fig. 5 is a cross-sectional rear end elevational view of the hitch apparatus of Fig. 1 on the line V-V of Fig. 3,
Fig. 6 is a cross-sectional side elevational view of the hitch apparatus of Fig. 1 on the line VI-VI of Fig. 2,
Fig. 7 is a perspective view of a detail of the hitch apparatus of Fig. 1,
Fig. 8 is a further perspective view of the detail of Fig. 7 of the hitch apparatus of Fig. 1,

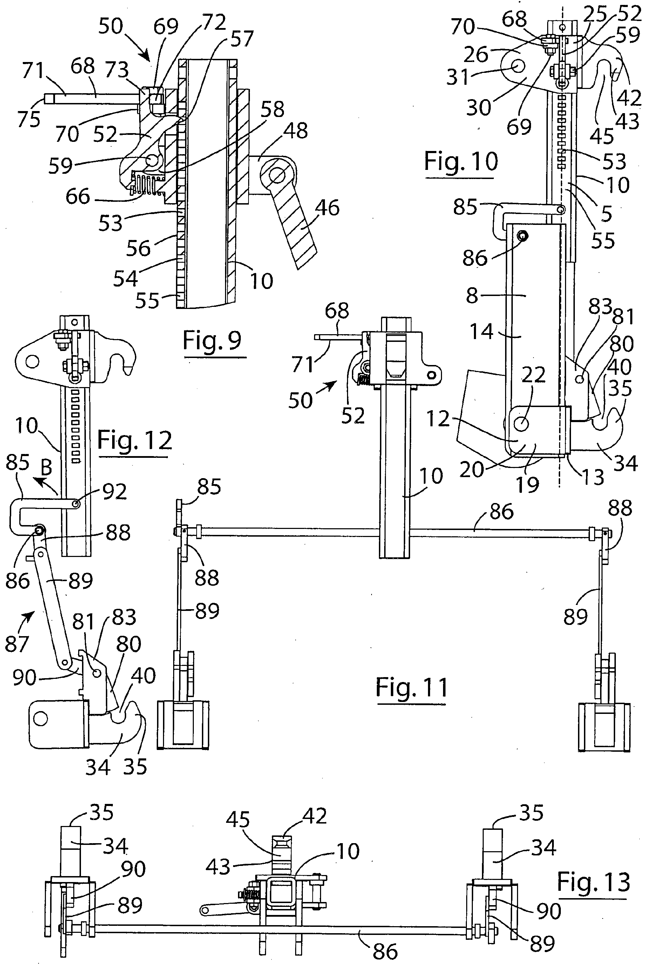

Fig. 9 is a cross-sectional side elevational view of the detail of Fig. 7 of the hitch apparatus of Fig. 1,
Fig. 10 is a further side elevational view of the hitch apparatus of Fig. 1,
Fig. 11 is a rear end elevational view of a linkage mechanism of the hitch apparatus of Fig. 1,
Fig. 12 is a side elevational view of the linkage mechanism of Fig. 11 of the hitch apparatus of Fig. 1, and
Fig. 13 is an underneath plan view of the linkage mechanism of Fig. 11 of the hitch apparatus of Fig. 1.

Referring to the drawings, there is illustrated a hitch apparatus according to the invention, indicated generally by the reference numeral 1, for hitching an implement to the three-point linkage of a tractor, neither the implement, the three-point linkage nor the tractor are illustrated. However, such tractors with three-point linkages will be well known to those skilled in the art, as will implements which are suitable for attaching to the three-point linkage of a tractor. The hitch apparatus 1 comprises a support element 5 comprising an elongated cross-member 7 of box section steel and a pair of spaced apart side members 8 also of box section steel welded to and extending downwardly from the cross-member 7 at respective opposite ends thereof. An upstanding member 10 of box section steel is welded to and extends upwardly from the cross-member 7 substantially midway between the ends thereof from which the side members 8 extend downwardly.

Each side member 8 terminates in a corresponding lower connecting bracket 12 for releasably connecting to respective lower links (not shown) of the three-point linkage of the tractor. Each lower connecting bracket 12 is formed by lower portions 13 of side webs 14 of the corresponding side member 8. A lower forward portion of a front web 16 of the box section of each side member 8 is removed to form an open mouth 17 into the hollow interior region 18 of the box section of the corresponding side member 8 for accommodating a corresponding one of the lower links into the hollow interior region 18 of the side member 8 between the lower portions 13 of the side webs 14. Reinforcing plates 19 welded to the lower portions 13 of the side webs 14 reinforce the lower portions 13 of the side webs 14 of each side member 8 to form respective side plates 20 of the lower connecting brackets 12. Bores 22 extending through the reinforcing plates 19 and the lower portions 13 of the side webs 14 of each side member 8 accommodate respective mounting pins (not shown) for engaging the corresponding lower link of the three-point linkage. The connection of such connecting brackets as the lower connecting brackets 12 to the lower links of a three-point linkage will be well known to those skilled in the art, and further description should not be required.

The spacing between the side members 8 and in turn the spacing between the mounting brackets 12 is similar to the normal spacing between the lower links of a three-point linkage.

A carrier element 25 is slideably mounted on the upstanding member 10 of the support element 5, and is slideable in a generally upwardly and downwardly direction on the upstanding member 10. The carrier element 25 comprises a pair of spaced apart side plates 26 joined by front and rear end plates 27 and 28, respectively, all of steel plate material and welded together. The side and end plates 26, 27 and 28 define a bore 29 of the carrier element 25 which is of cross-section substantially similar to the outer cross-section of the upstanding member 10, so that the carrier element 25 is slideable freely in a generally upwardly and downwardly direction on the upstanding member 10. The side plates 27 extend forwardly to form an upper connecting bracket 30 for releasably connecting the hitch apparatus 1 to the upper link of the three-point linkage of the tractor. Bores 31 extending through the side plates 26 accommodate a mounting pin for engaging the upper link of the three-point linkage, as will be understood by those skilled in the art.

A pair of lower coupling elements 34 extend rearwardly from the lower ends of the side members 8 for releasably engaging corresponding lower mounting brackets on the implement to be attached to the three-point linkage of the tractor. Each lower coupling element 34 comprises a lower hook-shaped member 35 of steel welded to a lower portion 37 of a rear web 38 of the box section of the corresponding side member 8 and extending rearwardly therefrom. Each lower hook-shaped member 35 is configured to define an upwardly facing open mouth 40 for engaging a mounting pin of the corresponding lower mounting bracket of the implement. The spacing between the lower hook-shaped members 35 is substantially similar to the standard spacing between lower mounting brackets of an implement which are provided for hitching the implement to the lower links of a three-point linkage.

An upper coupling element 42 is carried on the carrier element 25 and extends rearwardly therefrom. The upper coupling element 42 comprises an upper hook-shaped member 43 of steel which is welded to and extends rearwardly from the rear end plate 28 of the carrier element 25. The upper hook-shaped member 43 defines a downwardly facing open mouth 45 for engaging a corresponding mounting pin of an upper mounting bracket of the implement. The upper mounting bracket of the implement is of the type which is provided for coupling to the upper link of a three-point linkage.

A drive means, in this embodiment of the invention a double-acting hydraulic ram 46 is coupled between a pair of brackets 47 extending from one of the side members 8 and a pair of brackets 48 extending from one of the side plates 26 of the carrier element 25 for urging the carrier element 25 in the generally upwardly and downwardly direction along the upstanding member 10 for varying the spacing between the upper hook-shaped member 43 and the two lower hook-shaped members 35 for accommodating implements in which the spacing between the level of the upper mounting bracket and the level of the two lower mounting brackets thereof is different. Additionally, the hydraulic ram 46 urges the upper hook-shaped member 43 downwardly on the upstanding member 10 so that the downwardly facing open mouth 45 of the upper hook-shaped member 43 co-operates with the upwardly facing open mouths 40 of the two lower hook-shaped members 35, so that when the mounting pins of the upper and lower mounting brackets of the implement are engaged in the open mouths 45 and 40 of the upper and lower hook-shaped members 43 and 35, the implement is tightly gripped between the upper and lower hook-shaped members 43 and 35.

The lower hook-shaped members 35 are located on the side members 8 of the support element 5 at a level substantially similar to the level at which the lower connecting brackets 12 are located on the side members 8, and the upper hook-shaped member 43 is located on the carrier element 25 at a level substantially similar to the level at which the upper connecting bracket 30 is located on the carrier element 35. Thus, as the carrier element 25 is moved in the generally upwardly and downwardly direction along the upstanding member 10 of the support element 5, the spacing between the upper hook-shaped member 43 on the one hand and the lower hook-shaped members 35 on the other hand is directly proportional to the spacing between the upper connecting bracket 30 on the one hand and the lower connecting brackets 12 on the other hand. Thus, the geometry of the upper hook-shaped member 43 and the lower hook-shaped members 35 follows the geometry of the upper and lower links of the three-point linkage of the tractor.

A retaining means for preventing upward movement of the carrier element 25 once the mounting pins of the upper and lower mounting brackets of the implement are tightly gripped between the upper hook-shaped member 43 and the lower hook-shaped members 35 comprises a ratchet type mechanism 50. The ratchet type mechanism 50 comprises a pawl 52 pivotally connected to the carrier element 25 for releasably engaging a notched rack 53, which is formed by a plurality of spaced apart rectangular openings 54 formed along an adjacent side web 55 of the upstanding member 10. The openings 54 form notches 56 of the notched rack 53 into which an engagement member 57 of the pawl 52 is engageable. The pawl 52 is configured to be freely and sequentially releasably engageable with the notches 56 as the carrier element 25 is being moved downwardly along the upstanding member 10 to permit free downward movement of the carrier element 25 along the upstanding member 10, but remains firmly engaged in the adjacent notch 56 in response to any upward movement of the carrier element 25 upwardly along the upstanding member 10, thereby preventing upward movement of the carrier element 25, in order to retain the implement gripped between the upper and lower hook-shaped members 43 and 35.

A pair of spaced apart carrier brackets 58 extending from the adjacent side plate 26 carries a pivot pin 59. The pawl 52 is pivotally mounted on the pivot pin 59 and the engagement member 57 of the pawl 52 is shaped to permit the downward movement of the carrier element 25 along the upstanding member 10 with the engagement member 57 sequentially passing over the notches 56, and to prevent upward movement of the carrier element 25 along the upstanding member 10. Thus, once the mounting pins of the upper and lower mounting brackets of the implement are tightly engaged between the upper hook-shaped member 43 and the lower hook-shaped members 35, the ratchet mechanism 50 prevents upward movement of the carrier element 25 on the upstanding member 10, thus preventing disengagement of the implement from the hitch apparatus 1.

A compression spring 66 acting between the pawl 52 and the side plate 26 of the carrier element 25 to which the pawl is pivotally connected urges the engagement member 57 of the pawl 52 into engagement with the notches 56 of the notched rack 53.

A release means for releasing the engagement member 57 of the pawl 52 from a notch 56 of the notched rack 53, and also for retaining the engagement member 57 disengaged from the notched rack 53, in this embodiment of the invention comprises a release latch 68 which is pivotally carried on a pivot pin 69, which in turn is carried on a pivot mounting bracket 70 extending from the side plate 26 of the carrier element 25 to which the pawl 52 is pivotally connected. The release latch 68 is of L shape, having a lever part 71 and an engagement latching part 72 extending from the lever part 71 adjacent the pivot pin 69. The latching part 72 is engageable with a release member 73 of the pawl 52 for urging the release member 73 in the direction of the arrow A for disengaging the engagement member 57 of the pawl 52 from the notched rack 53, so that the carrier element 25 can be moved upwardly along the upstanding member 10 for releasing the implement from the hitch apparatus 1. A bore 74 extending through the lever part 71 adjacent a distal end 75 thereof is provided for engaging a first pull cord (not shown) which is remotely operable from the tractor cab for urging the latch member 72 into engagement with the release member 73 of the pawl 52 for in turn disengaging the pawl 52 from the rack 54.

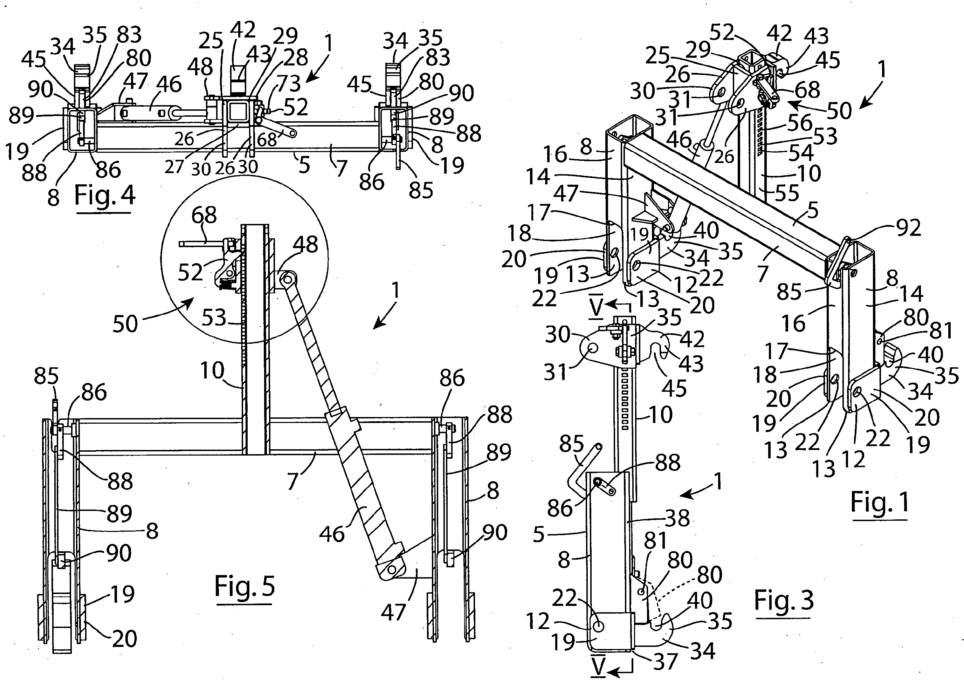

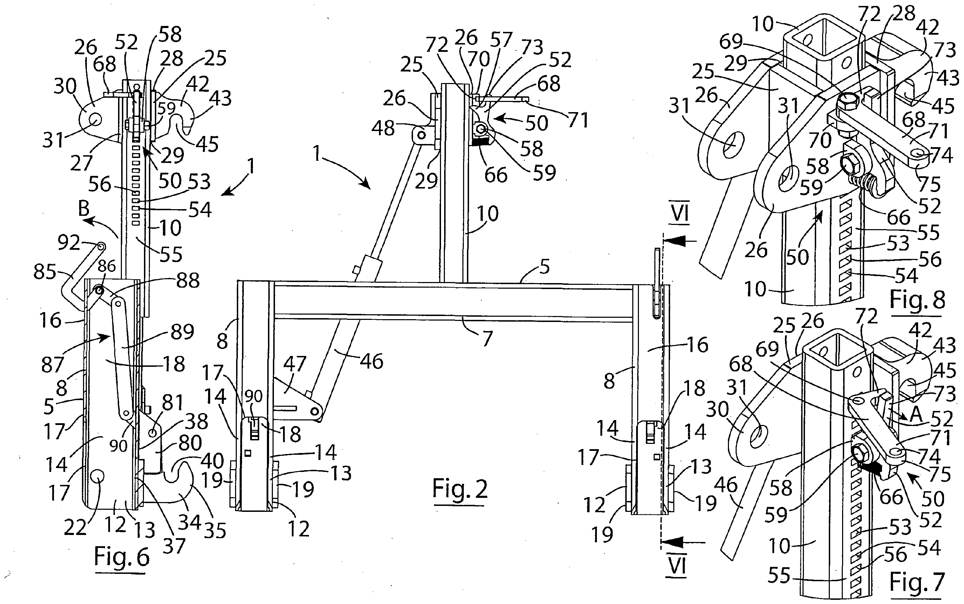

A closure element 80 is pivotally mounted on a pivot pin 81 on the rear web 38 of each side member 8 and is pivotal from an open state illustrated in full lines in Figs. 1, 3 and 6 for providing access to the open mouths 40 of the lower hook-shaped members 35, and a closed state illustrated in broken lines in Fig. 3 for closing the open mouth 40 of the corresponding lower hook-shaped member 35 in order to retain the mounting pin of the corresponding lower mounting bracket of the implement therein. The pivot pin 81 of each closure element 80 is carried on a pivot mounting bracket 83 welded to the rear web of the corresponding side member 8.

A lever 85 is rigidly mounted on a pivot shaft 86 which is pivotally mounted in the side members 8 and extends through the cross-member 7. A pair of linkage mechanisms 87 couple the corresponding closure elements 80 to the pivot shaft 86, so that the closure elements 80 are pivotal between the open and closed states by the lever 85. Each linkage mechanism 87 comprises a link member 88 extending rigidly from the pivot shaft 86 within the corresponding side member 8. An elongated bar 89 of each linkage mechanism 87 extends through the corresponding side member 8, and is pivotally connected at one end to the corresponding link member 88, and at the other end to a member 90 extending rigidly from the corresponding closure element 80. Pivoting the lever 85 in the direction of the arrow B urges the closure elements 80 from the closed state to the open state.

A second pull cord (not shown) secured to the lever 85 in a bore 92 adjacent the distal end thereof allows remote operation of the lever 85 in the direction of the arrow B for in turn operating the closure elements 80 from the closed state to the open state. A pair of tension springs (not shown) acting between the members 90 of the respective closure elements 80 urges the closure elements 80 into the closed state. The closure elements 80 are pivotally mounted on the pivot pins 81 and are shaped so that as the two lower hook-shaped members 35 are being brought into engagement with the mounting pins of the lower mounting brackets of an implement, the closure elements 80 are urged into the open state by the action of the mounting pins as they pass into the open mouths 40 of the lower hook-shaped members 35. On the mounting pins of the lower mounting brackets of the implement being fully engaged in the open mouths 40 of the two lower hook-shaped members 35, the tension springs (not shown) urge the closure elements 80 into the closed state, thus retaining the mounting pins securely in the open mouths 40 of the two lower hook-shaped members 35 of the hitch apparatus 1.

In use, the hitch apparatus 1 is coupled to the three-point linkage of a tractor in a conventional manner by manually coupling the lower connecting brackets 12 to the lower links of the three-point linkage and the upper connecting bracket 30 to the upper link of the three-point linkage. The ram 46 is coupled to the hydraulic system of the tractor. Thereafter, when it is desired to hitch an implement to the tractor, the tractor is reversed towards the implement, and with the carrier element located adjacent the upper end of the upstanding member 10, the lower hook-shaped members 35 are aligned beneath the mounting pins of the two lower mounting brackets of the implement. The hitch apparatus 1 is raised by the three-point linkage to engage the mounting pins of the lower mounting brackets in the open mouths 40 of the two lower hook-shaped members 35. On the mounting pins of the two lower mounting brackets of the implement being fully engaged in the open mouths 40 of the two lower hook-shaped members 35, the closure elements 80 are spring urged by the tension springs into the closed state, thus retaining the mounting pins of the two lower mounting brackets of the implement securely in the open mouths 40 of the two lower hook-shaped mounting members 35.

The carrier element 25 is then urged downwardly along the upstanding member 10 by the ram 46 until the mounting pin of the upper mounting bracket of the implement is engaged in the open mouth 45 of the upper hook-shaped member 35. As the carrier element 25 is being urged downwardly on the upstanding member 10, the engagement member 57 of the pawl 52 sequentially engages the notches 56 of the notched rack 53. When the mounting pin of the upper mounting bracket of the implement is tightly engaged in the open mouth 45 of the upper hook-shaped member 43, and the mounting pins of the lower and upper mounting brackets of the implement are tightly gripped between the lower and upper hook-shaped members 35 and 43, the pawl 52 of the ratchet mechanism 50 engages the adjacent one of notches 56, thereby preventing upward movement of the carrier element 25 along the upstanding member 10, in order to retain the implement in engagement with the hitch apparatus 1, and to prevent inadvertent disengagement of the implement from the hitch apparatus 1.

When it is desired to release the implement from the hitch apparatus 1, the first pull cord is operated from the cab in order to urge the latching part 72 of the latch 68 into engagement with the release member 73 of the pawl 52 for disengaging the engagement member 57 of the pawl 52 from the notched rack 53, thereby allowing upward movement of the carrier element 25 along the upstanding member 10. The ram 46 is then operated for urging the carrier element 25 upwardly along the upstanding member 10, thereby disengaging the upper hook-shaped member 43 from the mounting pin of the upper mounting bracket of the implement. The second pull cord (not shown) is then pulled in order to urge the closure elements 80 from the closed state into the open state, so that by lowering the hitch apparatus 1 by the three-point linkage, the two lower hook-shaped members 35 disengage the mounting pins of the two lower mounting brackets of the implement, and thereby the implement is disengaged from the hitch apparatus 1.

The advantages of the hitch apparatus according to the invention are many. A particularly important advantage of the hitch apparatus is that it allows automatic coupling of an implement to the three-point linkage of a tractor, without the need for the driver to dismount the tractor to carry out the coupling. A further advantage of the invention is provided by the ratchet mechanism which retains the carrier element 25 and in turn the upper hook-shaped member 43 in position on the upstanding member 10, so that the implement is tightly gripped between the upper and lower hooked-shaped members, thereby avoiding any danger of the implement being inadvertently released from the hitch apparatus 1 by inadvertent operation of the ram 46.

Another advantage of the invention is that by virtue of the fact that the spacing between the upper coupling element 42 and the two lower coupling elements 34 is variable, the hitch apparatus 1 can be readily adjusted to suit implements with different spacings between the level of the upper mounting bracket and the level of the two lower mounting brackets by merely operating the hydraulic ram 46. For example, implements such as a fertiliser shaker is provided with a spacing of approximately 500mm centre to centre between the level of the upper mounting bracket and the level of the two lower mounting brackets, while a land leveller for example may have a spacing centre to centre of 700mm approximately between the level of the upper mounting bracket and the level of the two lower mounting brackets. Additionally, by virtue of the fact that the geometry of the upper coupling element 42 and the two lower coupling elements 34 follows the geometry of the three-point linkage of the tractor, the hitch apparatus according to the invention provides an appropriate lift for implements of different centre to centre spacing between the upper mounting bracket and the two lower mounting brackets. For example, in the case of the majority of implements which have a relatively small centre to centre spacing between the level of the upper mounting bracket and the level of the two lower mounting brackets where the centre to centre spacing is in the order of 500mm, the hitch apparatus allows a substantially parallel lift, while the hitch apparatus provides an angular lift for implements with a larger spacing centre to centre between the level of the upper mounting bracket and the level of the two lower mounting brackets, for example, a spacing of the order of 700mm.

A further advantage of the invention is that it allows any implement to be automatically coupled to a three point linkage of a tractor without the need for any adaptor plates being fitted to the implement. Additionally, by virtue of the fact that the upper connecting bracket for connecting the hitch apparatus to the upper link of a tractor, and the upper coupling element for connecting the implement to the hitch apparatus 1 are both mounted on the carrier element 25 which is slideably mounted on the upstanding member 10, the hitch geometry of the implement remains unaltered as the upper coupling element is adjusted to suit the implement upper link of the three-point linkage is also correspondingly adjusted, thereby maintaining the spacing between the upper link and the lower link correct.

A further advantage of the invention is that the lower coupling elements adjust to the upper coupling element regardless of the orientation of the open mouth of the upper coupling element and regardless of the frame construction, and coupling to the implement is implemented automatically, as opposed to manually, without the use of spanners.

Additionally, by virtue of the fact that the implement can be automatically hitched to the tractor without the need for the driver to dismount the tractor, the coupling of an implement to the three point linkage of a tractor becomes a considerably safer operation, as does the unhitching of the implement from the tractor, since unhitching of the implement likewise does not require the driver to dismount from the tractor.

While the drive means for urging the carrier element upwardly and downwardly on the upstanding member has been described as comprising a double acting ram, any other suitable drive means may be provided. In certain cases, a single acting spring return ram may be provided, and in other cases, a linear electrically powered motor may be provided. Indeed, in other cases, it is envisaged that the carrier member may be manually urgeable upwardly and downwardly along the upstanding member 10.

While the hitch apparatus has been described as comprising closure elements for closing the open mouths of the lower coupling elements, while the provision of closure elements are advantageous, they are not essential. However, in the case of heavy implements, they may be required.

While the retaining means has been described as comprising a ratchet mechanism, any other suitable retaining means may be provided, which may be manually operated or automatically operated. For example, the retaining means may be provided in the form of a pin which would be manually engageable with a selected one of a plurality of pin engaging bores.

While the upper and lower coupling elements have been described with respective open mouths facing each other, the upper coupling element may be provided with its open mouth facing upwardly in the same manner as the open mouth of the two lower coupling elements face upwardly. Indeed, in certain cases it is envisaged that the open mouths of the upper and lower coupling elements could all face downwardly, and furthermore, it is envisaged that the open mouth of the upper coupling element could face upwardly while the open mouths of the lower coupling elements face downwardly.

Additionally, while the lower coupling elements have been described as being located on the support element at a level substantially similar to the level at which the lower connecting brackets are located on the support element, while this is advantageous, it is not essential, the lower coupling elements could be located at a level above or below the level of the lower connecting brackets. Furthermore, it will be appreciated that while it is preferable, it is not essential that the upper coupling element is located on the carrier element at a level substantially similar to the level at which the upper connecting bracket is located on the carrier element. The upper coupling element could be located on the carrier element at a level above or below the level at which the upper connecting bracket is located on the carrier element.

## Claims

1. A hitch apparatus for hitching an implement to a three-point linkage of a tractor, **characterised in that** the hitch apparatus comprises a support element (5) and a carrier element (25) coupled together, a pair of spaced apart lower connecting brackets (12) located on the support element (5) for connecting to the two lower links of the three-point linkage of the tractor, a pair of spaced apart lower coupling elements (34) mounted on and extending from the support element (5) for releasably engaging corresponding lower mounting brackets of the implement, an upper connecting bracket (30) carried on the carrier element (25) for connecting to the upper link of the three-point linkage of the tractor, and an upper coupling element (42) carried on and extending from the carrier element (25) for releasably engaging a corresponding upper mounting bracket of the implement, one of the carrier element (25) and the support element (5) being moveable relative to the other one of the carrier element (25) and the support element (5) in a generally upwardly and downwardly direction for varying the spacing between the upper coupling element (42) and the two lower coupling elements (34).

2. A hitch apparatus as claimed in Claim 1 **characterised in that** the lower coupling elements (34) are located on the support element (5) at a level substantially similar to the level at which the lower connecting brackets (12) are located on the support element (5), and the upper coupling element (42) is located on the carrier element (25) at a level substantially similar to the level at which the upper connecting bracket (30) is located on the carrier element (25).

3. A hitch apparatus as claimed in Claim 1 or 2 **characterised in that** the upper coupling element (42) co-operates with the lower coupling elements (34) for releasably gripping the implement with the lower and upper mounting brackets of the implement releasably gripped between the upper and lower coupling elements (42, 34).

4. A hitch apparatus as claimed in any preceding claim **characterised in that** the carrier element (25) is slideably mounted on the support element (5).

5. A hitch apparatus as claimed in any preceding claim **characterised in that** a drive means (46) is provided for urging the carrier element (25) in the generally upwardly and downwardly direction relative to the support element (5).

6. A hitch apparatus as claimed in any preceding claim **characterised in that** the lower coupling elements (34) define respective open mouths (40), and the upper coupling element (42) defines an open mouth (45), the lower coupling elements (34) being located on the support element (5), and the upper coupling element (42) being located on the carrier element (25) with the open mouths (40) of the lower coupling elements (34) facing the open mouth (45) of the upper coupling element (42), so that when the lower and upper coupling elements (34, 42) engage the corresponding lower and upper mounting brackets of the implement in the open mouths (40, 45) thereof, the lower and upper mounting brackets of the implement are securely gripped between the lower and upper coupling elements (34, 42).

7. A hitch apparatus as claimed in Claim 6 **characterised in that** the two lower coupling elements (34) comprise respective lower hook-shaped elements (35) defining the respective open mouths (40) thereof, and the upper coupling element (42) comprises an upper hook-shaped element (43) defining the open mount (45) thereof.

8. A hitch apparatus as claimed in Claim 6 or 7 **characterised in that** a closure element (80) is provided corresponding to each lower coupling element (34) for releasably closing the open mouth of the corresponding lower coupling element (34), the closure elements (80) being operable between a closed state closing the open mouths (40) of the lower coupling elements (34) and an open state providing access to the open mouths (40) thereof.

9. A hitch apparatus as claimed in Claim 8 **characterised in that** a remotely operable operating lever (85) is mounted on the support element (5) and is coupled to the closure elements (80) for operating the closure elements (80) from the closed state to the open state.

10. A hitch apparatus as claimed in Claim 8 or 9 **characterised in that** the closure elements (80) are resiliently urged into the closed state.

11. A hitch apparatus as claimed in any preceding claim **characterised in that** a releasable retaining means (50) is provided for retaining the upper coupling element (42) at a plurality of selectable spacings from the lower coupling elements (34).

12. A hitch apparatus as claimed in Claim 11 **characterised in that** the retaining means (50) is mounted on one of the carrier element (25) and the support element (5), and is releasably engageable with the other one of the carrier element (25) and the support element (5) for releasably retaining the carrier element (25) with the upper coupling element (42) at a selected one of the spacings from the two lower coupling elements (34).

13. A hitch apparatus as claimed in Claim 11 or 12 **characterised in that** the retaining means comprises a ratchet type mechanism.

14. A hitch apparatus as claimed in any of Claims 11 to 13 **characterised in that** a remotely operable release means (68) is provided for releasing the retaining means (50).

15. A tractor comprising a three-point linkage, and the hitch apparatus as claimed in any preceding claim mounted on the three-point linkage.
